# EUROPEAN PATENT APPLICATION

(11) **EP 4 827 101 A1**
(43) Date of publication of application: **21.10.2026**
(21) Application number: 24916012.8
(22) Date of filing: 10.01.2024
(51) Int. Cl.: H04N 23/63, H04N 23/741, G06T 5/90, G06T 5/00

(54) **IMAGE DISPLAY METHOD AND RELATED DEVICE**

(71) Applicant: Honor Device Co., Ltd., Shenzhen, Guangdong 518040 (CN)
(72) Inventor: HU, Zhicheng, Shenzhen, Guangdong 518040 (CN); WU, Liyou, Shenzhen, Guangdong 518040 (CN); LEI, Caihua, Shenzhen, Guangdong 518040 (CN)
(74) Representative: Gill Jennings & Every LLP
(86) International application number: PCT/CN2024/071698
(87) International publication number: WO 2025/147935

(57) **Abstract**

This application provides an image display method and a related device. The image display method may be applied to an electronic device. The electronic device detects a first user operation for indicating to display a preview interface; displays a first image on the preview interface at a first moment in response to the first user operation, where the first image does not include a face, the first image includes a first region and a second region, and average brightness of the first region is greater than average brightness of the second region; and displays a second image on the preview interface at a second moment, where the second image includes a face, the second image includes a third region and a fourth region, the face is located in the fourth region, and average brightness of the third region is greater than average brightness of the fourth region; and the average brightness of the first region is greater than the average brightness of the third region, and the average brightness of the fourth region is greater than the average brightness of the second region. According to the method, a high dynamic range image can be displayed during image preview, so that user experience is improved.

## Description

### TECHNICAL FIELD

This application relates to the field of terminal technologies, and in particular, to an image display method and a related device.

### BACKGROUND

A dynamic range (dynamic range, DR) is used in many fields to represent a ratio of a maximum value to a minimum value of each variable. In a digital image, the dynamic range represents a ratio of a maximum gray scale value to a minimum gray scale value within a displayable range of the image, to be specific, a quantity of gray scale levels of the image from "brightest" to "darkest". Because a dynamic range of a natural scene in the real world is between 10³ and 10⁶ and is very large, the dynamic range is referred to as a high dynamic range (HDR). In comparison with a high dynamic range image, a dynamic range of an ordinary image is a low dynamic range (LDR), and sometimes may also be referred to as a standard dynamic range (SDR).

A larger dynamic range of an image indicates richer brightness levels that the image can represent, so that better brightness-darkness contrast and details can be presented, a visual effect of the image is more vivid, and a real scene can be better restored, bringing better visual experience to users. However, currently, during image preview, a dynamic range of an image presented by an electronic device is very limited, resulting in a significant difference between user experience and a real scene. How to display a high dynamic range image during image preview is a problem that needs to be urgently discussed in the industry.

### SUMMARY

This application provides an image display method and a related device. According to the image display method, a high dynamic range image can be displayed during image preview, so that user experience is improved.

According to a first aspect, this application provides an image display method, applied to an electronic device. The method includes: detecting a first user operation for indicating to display a preview interface; displaying a first image on the preview interface at a first moment in response to the first user operation, where the first image does not include a face, the first image includes a first region and a second region, and average brightness of the first region is greater than average brightness of the second region; and displaying a second image on the preview interface at a second moment, where the second image includes a face, the second image includes a third region and a fourth region, the face is located in the fourth region, and average brightness of the third region is greater than average brightness of the fourth region; and the average brightness of the first region is greater than the average brightness of the third region, and the average brightness of the fourth region is greater than the average brightness of the second region.

In this embodiment of this application, the electronic device displays the preview interface in response to the first user operation for indicating to display the preview interface. The preview interface may display images (for example, the first image and the second image) obtained by the electronic device through real-time obtaining and dynamic range expansion. The first moment and the second moment are two moments in a process in which the electronic device displays the preview interface. The first image displayed at the first moment does not include a face, and the second image displayed at the second moment includes a face. The electronic device may perform different dynamic range expansions on an obtained image depending on whether the image includes a face. In this embodiment of this application, a dynamic range of the first image is greater than a dynamic range of the second image.

As described above, the average brightness N2 of the first region in the first image in the first image is greater than the average brightness N1 of the second region, the average brightness M1 of the third region in the second image is greater than the average brightness M2 of the fourth region, the average brightness N1 of the first region is greater than the average brightness M1 of the third region, and the average brightness M2 of the fourth region is greater than the average brightness N2 of the second region, that is, N2>M1>M2>N1. It can be learned that the dynamic range of the first image is greater than the dynamic range of the second image.

It should be understood that lines, details, and the like in an image become more distinct as a dynamic range of the image increases, and a presentation effect of a face region at a large dynamic range often fails to satisfy user requirements. According to the method, by performing different degrees of dynamic range expansion on the image (that is, the first image) not including the face region and the image (that is, the second image) including the face region, a high dynamic range effect may be presented when displaying the image not including the face region, and appropriate dynamic range expansion may be performed when displaying the image including a face. In this way, different display requirements of a user for the image not including the face region and the image including the face region may be satisfied, thereby improving user experience.

In a possible implementation, the first image includes the first region and the second region. In other words, in this embodiment of this application, the first image may be divided into the first region and the second region. The second image includes the third region and the fourth region. In other words, in this embodiment of this application, the second image may be divided into the third region and the fourth region. The first region corresponds to the third region, and the second region corresponds to the fourth region.

Optionally, image content corresponding to the first region and image content corresponding to the third region is the same, that is, the image content corresponding to the first region and the image content corresponding to the third region is content captured at a same position. Image content corresponding to the second region and image content corresponding to the fourth region differ only in a region in which a face is located, that is, the image content corresponding to the second region and the image content corresponding to the fourth region is content captured at a same shooting position. The shooting position does not include a face at the first moment, and the shooting position includes a face at the second moment. For example, the face is not in the frame at the first moment, and the face is in the frame at the shooting positions corresponding to the second region and the fourth region at the second moment.

With reference to the first aspect, in a possible implementation, the first image is obtained through processing based on metadata information corresponding to the first image, the second image is obtained through processing based on metadata information corresponding to the second image, and the metadata information includes at least one of gray scale information and brightness information of the face region.

With reference to the first aspect, in a possible implementation, the gray scale information includes a first grayscale histogram and a second grayscale histogram. The first grayscale histogram is a grayscale histogram obtained through calculation based on a grayscale histogram of an image with a first exposure level or a grayscale histogram of an image obtained by fusing a plurality of image frames with different exposure levels. The second grayscale histogram is a histogram of an output image synthesized from a plurality of image frames with different exposure levels or a low dynamic range image.

For example, the grayscale histogram of the image with the first exposure level may correspond to a normally exposed raw image, and the plurality of image frames with different exposure levels may be a plurality of raw image frames with different exposure levels, such as an ultra-short exposure frame, an ultra-long exposure frame, and a normal exposure frame.

In this embodiment of this application, dynamic range expansion may be performed on an image by using metadata information corresponding to the image.

With reference to the first aspect, in a possible implementation, the method further includes: compressing, based on gray scale information of the first image, brightness of a fused image corresponding to the first image, to obtain a first to-be-processed image, where the fused image corresponding to the first image is obtained by fusing a plurality of image frames with different exposure levels corresponding to the first image, the first to-be-processed image includes a first to-be-processed region and a second to-be-processed region, and average brightness of the first to-be-processed region is greater than average brightness of the second to-be-processed region; increasing brightness of the first to-be-processed region based on the gray scale information of the first image, to obtain a second to-be-processed image; and performing color gamut mapping on the second to-be-processed image, to obtain the first image, where the first to-be-processed region corresponds to the first region, and the second to-be-processed region corresponds to the second region.

In this embodiment of this application, brightness adjustment is separately performed on a low-brightness region (that is, the second to-be-processed region) and a high-brightness region (that is, the first to-be-processed region) in the fused image corresponding to the first image, to obtain the first image with a high dynamic range.

With reference to the first aspect, in a possible implementation, the method further includes: calculating a first expansion coefficient of the first image based on a first grayscale histogram corresponding to the first image and a second grayscale histogram corresponding to the first image; and calculating a second expansion coefficient of the first image based on the first grayscale histogram corresponding to the first image, where the first expansion coefficient of the first image or the second expansion coefficient of the first image is used for performing brightness adjustment on the fused image corresponding to the first image.

With reference to the first aspect, in a possible implementation, the method further includes: performing regularization on the second grayscale histogram corresponding to the first image, to obtain a regularized histogram corresponding to the first image, where the regularized histogram corresponding to the first image is used for performing brightness adjustment on the fused image corresponding to the first image when it is predicted that the first image includes a banding artifact.

In this embodiment of this application, when it is predicted that the first image includes the banding artifact, brightness adjustment may be performed on the fused image corresponding to the first image based on the regularized histogram corresponding to the first image. According to the method, the banding artifact in the first image may be removed, thereby improving a display effect.

With reference to the first aspect, in a possible implementation, the method further includes: compressing, based on the metadata information corresponding to the second image, brightness of a fused image corresponding to the second image, to obtain a third to-be-processed image, where the fused image corresponding to the second image is obtained by fusing a plurality of image frames with different exposure levels corresponding to the second image, the third to-be-processed image includes a third to-be-processed region and a fourth to-be-processed region, and average brightness of the third to-be-processed region is greater than average brightness of the fourth to-be-processed region; increasing brightness of the third to-be-processed region based on the metadata information corresponding to the second image, to obtain a fourth to-be-processed image; and performing color gamut mapping on the fourth to-be-processed image, to obtain the second image, where the third to-be-processed region corresponds to the third region, and the fourth to-be-processed region corresponds to the fourth region.

With reference to the first aspect, in a possible implementation, the method further includes: calculating a first expansion coefficient of the second image based on a first grayscale histogram corresponding to the second image and a second grayscale histogram corresponding to the second image; calculating a second expansion coefficient of the second image based on the second grayscale histogram corresponding to the second image; and when it is determined that the second image includes a face, calculating a third expansion coefficient of the second image based on brightness information of a face region corresponding to the second image, where the third expansion coefficient is positively correlated with the brightness information of the face region. At least one of the first expansion coefficient of the second image, the second expansion coefficient of the second image, and the third expansion coefficient of the second image is used for performing brightness adjustment on the fused image corresponding to the second image.

With reference to the first aspect, in a possible implementation, the method further includes: performing regularization on the second grayscale histogram corresponding to the second image, to obtain a regularized histogram corresponding to the second image, where the regularized histogram corresponding to the second image is used for performing brightness adjustment on the fused image corresponding to the second image when it is predicted that the second image includes a banding artifact.

In this embodiment of this application, when it is predicted that the second image includes the banding artifact, brightness adjustment may be performed, based on the regularized histogram corresponding to the second image, on the fused image corresponding to the second image. According to the method, the banding artifact in the second image may be removed, thereby improving a display effect.

With reference to the first aspect, in a possible implementation, the method further includes: When it is determined that similarity between the first image and a previous image frame of the first image is greater than a preset threshold, performing, based on brightness adjustment information obtained based on metadata information corresponding to the previous image frame, brightness adjustment on the fused image corresponding to the first image, to obtain the first image, where the fused image corresponding to the first image is obtained by fusing a plurality of image frames with different exposure levels corresponding to the first image.

In this embodiment of this application, when the similarity between the first image and the previous image frame of the first image is greater than the preset threshold, dynamic range expansion may be performed on the first image by using the brightness adjustment information obtained based on the metadata information corresponding to the previous image frame, so that a calculation process can be simplified, and image processing efficiency can be improved. For example, brightness expansion information may include an expansion coefficient corresponding to the previous image frame, an inverse tone mapping curve, and the like.

With reference to the first aspect, in a possible implementation, a first expansion coefficient of a target image is obtained based on first contrast and second contrast, and the first contrast is obtained based on expectations of a high-brightness part and a low-brightness part in a first grayscale histogram corresponding to the target image. The second contrast is obtained based on expectations of a high-brightness part and a low-brightness part in a second grayscale histogram corresponding to the target image, and the target image is the first image or the second image.

With reference to the first aspect, in a possible implementation, a second expansion coefficient of the target image is obtained based on an average pixel level and a high-brightness coefficient of the target image, the high-brightness coefficient represents distribution of a high-brightness region in the target image, the average pixel level and the high-brightness coefficient of the target image are obtained based on the second grayscale histogram corresponding to the target image, and the target image is the first image or the second image.

In a possible implementation, the second expansion coefficient of the target image is obtained based on a first coefficient and a second coefficient. The first coefficient is obtained based on the average pixel level. The second coefficient is obtained based on the high-brightness coefficient.

It may be understood that a larger average pixel level indicates higher overall brightness of the target image. In this embodiment of this application, when the average pixel level is greater than the preset threshold, the first coefficient is reduced, so that excessive brightness of the image after dynamic range expansion can be avoided.

It may be understood that the high-brightness coefficient represents the distribution of the high-brightness region (or a proportion of the high-brightness region) in the target image, to be specific, a larger high-brightness coefficient indicates a larger distribution area of the high-brightness region in the image, and a smaller high-brightness coefficient indicates a smaller distribution area of the high-brightness region in the image. In this embodiment of this application, when the distribution area of the high-brightness regions is large, a small second coefficient is used, so that an excessively large high-brightness region in the image after dynamic range expansion can be avoided.

According to a second aspect, this application provides an electronic device. The electronic device includes one or more processors and one or more memories. The one or more memories are coupled to the one or more processors. The one or more memories are configured to store computer program code, and the computer program code includes computer instructions. When the one or more processors execute the computer instructions, the electronic device is caused to perform the method according to any one of the first aspect and the possible implementations of the first aspect.

According to a third aspect, an embodiment of this application provides a chip system. The chip system is used in an electronic device. The chip system includes one or more processors. The processors are configured to invoke computer instructions to cause the electronic device to perform the method according to any one of the first aspect and the possible implementations of the first aspect.

According to a fourth aspect, this application provides a computer-readable storage medium including instructions. When the instructions are run on an electronic device, the electronic device is caused to perform the method according to any one of the first aspect and the possible implementations of the first aspect.

According to a fifth aspect, this application provides a computer program product including instructions. When the computer program product runs on an electronic device, the electronic device is caused to perform the method according to any one of the first aspect and the possible implementations of the first aspect.

It may be understood that, the electronic device provided in the second aspect, the chip system provided in the third aspect, the computer storage medium provided in the fourth aspect, and the computer program product provided in the fifth aspect are all configured to perform the method provided in this application. Therefore, for beneficial effects that can be achieved by the electronic device, the chip system, the computer storage medium, and the computer program product, refer to beneficial effects in the corresponding method. Details are not described herein again.

### BRIEF DESCRIPTION OF DRAWINGS

FIG. 1A to FIG. 1C are examples of related user interfaces in which an "HDR preview" function for a preview scene is enabled;
FIG. 2 is a schematic diagram of an example of an overall procedure of an image display method according to an embodiment of this application;
FIG. 3 is a schematic diagram of an example of a hardware structure of an electronic device according to an embodiment of this application;
FIG. 4 is a schematic diagram of an example of software and hardware structures of an electronic device according to an embodiment of this application;
FIG. 5 is a schematic diagram of an example of an image display method according to an embodiment of this application;
FIG. 6 is a schematic diagram of an example of calculating a first expansion coefficient according to an embodiment of this application;
FIG. 7 is a schematic diagram of an example of calculating a second expansion coefficient according to an embodiment of this application;
FIG. 8A is a schematic diagram of an example of Table 1 according to an embodiment of this application;
FIG. 8B is a schematic diagram of an example of Table 2 according to an embodiment of this application;
FIG. 9 is a schematic diagram of an example of calculating a second ITM gain curve according to an embodiment of this application;
FIG. 10 is a schematic diagram of an example of calculating a slope according to an embodiment of this application; and
FIG. 11 is a schematic diagram of an example of calculating a third inverse tone mapping curve according to an embodiment of this application.

### DESCRIPTION OF EMBODIMENTS

The following clearly and completely describes the technical solutions in embodiments of this application with reference to the accompanying drawings in embodiments of this application. In descriptions of embodiments of this application, unless otherwise stated, "/" means "or". For example, A/B may represent A or B. In the specification, "and/or" describes only an association relationship between associated objects, and represents that three relationships may exist. For example, A and/or B may represent the following three cases: Only A exists, both A and B exist, and only B exists. In addition, in the descriptions of embodiments of this application, "a plurality of" means two or more.

It should be understood that, the terms "first", "second", and the like in the specification, claims, and accompanying drawings of this application are used to distinguish between different objects, and are not used to describe a specific order. In addition, terms "include", "have", and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" in this application means that specific features, structures, or characteristics described with reference to this embodiment may be included in at least one embodiment of this application. The phrase shown in various locations in the specification may not necessarily refer to a same embodiment, and is not an independent or optional embodiment exclusive from another embodiment. A person skilled in the art explicitly or implicitly understands that embodiments described in this application may be combined with other embodiments.

For ease of understanding of embodiments of this application, terms or concepts that may be used in embodiments are described below.
(1) Screen backlight brightness, also referred to as screen brightness, is a physical quantity representing luminance of a screen of an electronic device, and the unit may be nit (nit) or candelas per square meter (cd/m2).
(2) Pixel

The pixel is a smallest imaging unit in one image frame. One pixel may correspond to one coordinate point on an image. One pixel may correspond to one parameter (for example, a grayscale), or may correspond to a set of a plurality of parameters (for example, grayscale, brightness, and color).

Color information is used as an example. Generally, one image frame has three basic colors, that is, red (Red, represented by R below), green (Green, represented by G below), and blue (Blue, represented by B below). Other colors may be formed by combining the three basic colors. Therefore, each pixel on one image frame may include three pieces of color information R, G, and B, and values of the three pieces of color information R, G, and B (an R value, a G value, and a B value for short) on pixels may be different. For example, when values of three pieces of color information R, G, and B corresponding to one pixel are all 0, the pixel presents white; and when values of the three pieces of color information R, G, and B corresponding to one pixel are all 255, the pixel presents black.

A grayscale, also referred to as gray scale, is a parameter that represents lightness and darkness of an image. A light source behind each pixel may exhibit different brightness levels. The grayscale represents levels of different brightness from the darkest to the brightest. For an 8-bit (bit) screen, an image may include a total of 256 brightness levels from 0 to 255, that is, the image may include a total of 256 grayscales from 0 to 255.

In some embodiments of this application, a value from 0 to 255 may alternatively be converted into a corresponding value from 0 to 1 to represent a grayscale.

### (3) Inverse tone mapping

A process of recovering HDR information from an ordinary image (such as an LDR image or an SDR image) is referred to as the inverse tone mapping (inverse tone mapping, ITM). The inverse tone mapping may be performed on the LDR image by using an ITM function (also referred to as an inverse tone mapping curve), to obtain an HDR image corresponding to the LDR image. The ITM function may also be referred to as an inverse function of a camera response function (inversion of complete camera response function).

For example, an electronic device may expand a smaller parameter range of SDR image data to a larger parameter range based on the inverse tone mapping curve. For example, a brightness range of the SDR image data is 0 to 200 nits, and the brightness range of 0 to 200 nits is expanded to a brightness range of 0 to 1000 nits based on the inverse tone mapping curve.

A dynamic range of an image obtained by a conventional imaging display device and a dynamic range of an image that can be displayed by the conventional imaging display device are quite limited. Consequently, an image viewed by a user on the conventional imaging display device differs significantly from a real scene, resulting in poor user experience. In recent years, with continuous improvement of software and hardware technologies in the display field, increasing imaging display devices can support display of HDR images.

However, currently, most of images on an electronic device in a preview scene, for example, an image displayed on a camera preview interface, have a low dynamic range or a standard dynamic range. An HDR image shortage results in wasted display capabilities for display devices that support HDR image presentation, and leads to poor image display effects, affecting user experience.

In view of this, embodiments of this application provide an image display method. An electronic device may display, on a preview interface, an image obtained through dynamic range expansion. According to the method, a visual effect closer to a real scene can be brought to a user in a preview scene, and user experience is improved.

In this application, the electronic device is a device with a display service, and is not limited to a mobile phone and a tablet computer. Alternatively, the electronic device may be a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not specifically limited in embodiments of this application.

For example, the image display method provided in embodiments of this application may be embodied in the electronic device as an "HDR preview" function.

The "HDR preview" function may be enabled by using a control. For example, a preview interface of a camera application displayed by the electronic device includes a first control. The first control is configured to enable the "HDR preview" function. When a user touches the first control, the electronic device displays, in real time in response to a user operation, an image obtained through processing according to the image display method provided in this application on a preview window of the preview interface. A dynamic range of the image displayed on the preview window after the function is enabled is greater than a dynamic range of an image displayed on the preview window before the function is enabled. Alternatively, the "HDR preview" function may be always in a default enabled state. For example, when the electronic device displays the preview interface of the camera application, the image obtained through processing according to the image display method provided in this application is displayed, in real time, on the preview window of the preview interface.

**The "HDR preview" function provided in embodiments of this application for a preview scene is described below with reference to a user interaction (user interface, UI) interface provided in the electronic device by using an example in which the "HDR preview" function is in the default enabled state.**

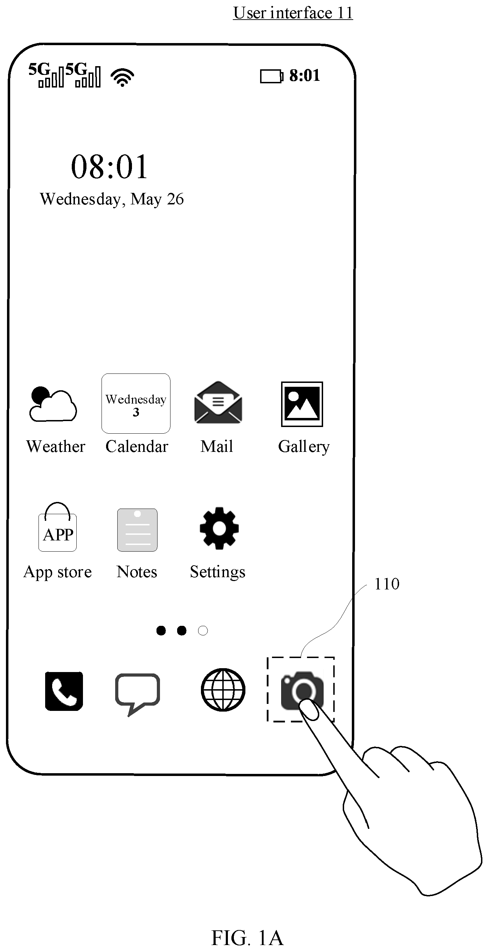

FIG. 1A to FIG. 1C are examples of related UIs in which an "HDR preview" function for a preview scene is enabled.

A user interface 11 shown in FIG. 1A is a home screen of an electronic device in an example according to an embodiment of this application. The user interface 11 may include an icon of at least one application (for example, weather, calendar, mail, settings, App store, notes, gallery 110, phone, messages, browser, and camera). Positions of the icon of the application and a name of the corresponding application may be adjusted based on a preference of a user. This is not limited in this application.

It should be noted that the home screen shown in FIG. 1A is an example display of this embodiment of this application, and the home screen of the electronic device may alternatively be in another style. This is not limited in this application.

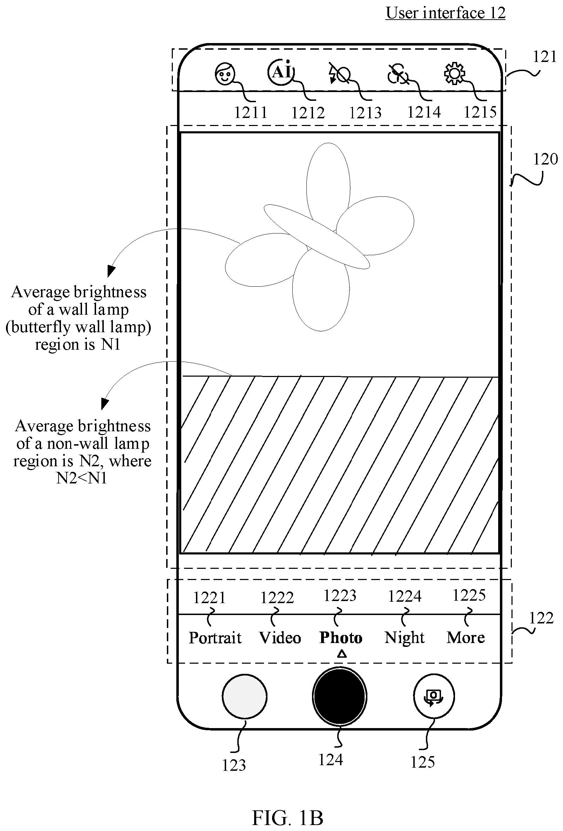

In FIG. 1A, the user may tap a camera icon 110 on the user interface 11. Correspondingly, the electronic device may detect a user operation acting on the camera icon 110, and in response to the user operation, display a user interface 12 shown in FIG. 1B. The user interface 12 is an example of a preview interface according to an embodiment of this application. In this application, the user operation acting on the camera icon 110 may be referred to as a first user operation for indicating to display a preview interface.

The user interface 12 may be a specific control or switch shown in FIG. 1B, and is described below in detail. A shooting mode menu 122 may include options of a plurality of camera modes such as portrait 1221, video 1222, photo 1223, night 1224, and more 1225. Different camera modes may implement different shooting functions. A camera mode pointed by a "triangle" in the shooting mode menu 122 indicates an initial camera mode or a camera mode selected by the user. For example, as shown in FIG. 1B, the "triangle" points to "photo", indicating that the camera is currently in a photo mode.

A preview region 120 is configured to display an image for previewing by the user. For ease of description, in this application, an image displayed in the preview region 120 may be referred to as a preview image. For example, the electronic device may obtain a high dynamic range image according to the image display method provided in this application, and display the high dynamic range image in the preview region 120. For details, refer to detailed descriptions below. Details are not described herein.

For example, this embodiment of this application shows that the preview region 120 includes a butterfly-shaped wall lamp (which may also be referred to as a butterfly wall lamp). The wall lamp is in a turned-on state, and in this case, average brightness of a wall lamp region is higher than average brightness of a non-wall lamp region. In other words, the average brightness of the wall lamp region is N1, the average brightness of the non-wall lamp region is N2, and N2 is greater than N1. In this application, the user interface 12 shown in FIG. 1B may be a preview interface displayed by the electronic device at a first moment. An image displayed in the preview region 120 may be referred to as a first image, the wall lamp region in the preview region 120 may be referred to as a first region, and the non-wall lamp region in the preview region 120 may be referred to as a second region. The average brightness N1 of the wall lamp region may be referred to as average brightness of the first region, and the average brightness N2 of the non-wall lamp region may be referred to as average brightness of the second region.

A small window 123 is used by the user to view shot pictures and videos.

A shooting control 124 is configured to enable the electronic device to shoot an image or record a video in response to a user operation.

A camera switching control 125 is configured to switch, between a front-facing camera and a rear-facing camera, a camera that acquires an image.

A shooting function switch 121 may include a beauty switch 1211, an AI mode switch 1212, a flash switch 1213, a filter switch 1214, and a setting control 1215. The beauty switch 1211 is configured to enable or disable a beauty function. The AI mode switch 1212 is configured to enable or disable an automatic mode recognition function. The flash switch 1213 is configured to enable or disable a flash. The filter switch 1214 is configured to enable or disable a filter. The setting control 1215 is configured to set various parameters during image acquisition.

In some other embodiments of this application, the "HDR preview" function may be enabled by using a control. For example, the user interface 12 may further display an HDR preview mode switch, to enable or disable the "HDR preview" function. It should be noted that display of a switch pattern and a location of the HDR preview mode is not limited in this application. After the user opens the camera to enter a preview interface, the "HDR preview" function may be in an enabled state, or may be in a disabled state.

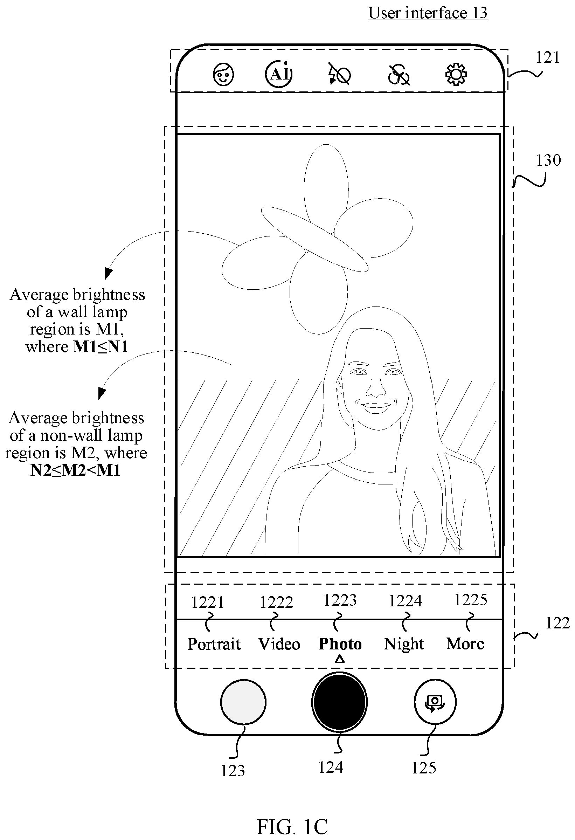

For example, assuming that after a first user focuses the camera of the electronic device on the wall lamp and the user interface 12 shown in FIG. 1B is displayed, a second user enters the field of view, and the electronic device may display a user interface 13 shown in FIG. 1C. The user interface 13 is an example of another preview interface according to an embodiment of this application.

The user interface 13 includes a preview region 130, a shooting function switch 121, and a shooting mode menu 122. The preview region 130 includes a wall lamp region and a non-wall lamp region. A wall lamp in the wall lamp region is in a turned-on state. The non-wall lamp region includes a face of the second user. It is assumed that average brightness of the wall lamp region in the preview region 130 is M1, and average brightness of the non-wall lamp region is M2. Because the wall lamp is in the turned-on state, M2 is less than M1. In this application, the user interface 13 shown in FIG. 1C may be a preview interface displayed by the electronic device at a second moment. An image displayed in the preview region 130 may be referred to as a second image, the wall lamp region in the preview region 130 may be referred to as a third region, and the non-wall lamp region in the preview region 130 may be referred to as a fourth region. The average brightness M1 of the wall lamp region may be referred to as average brightness of the third region, and the average brightness M2 of the non-wall lamp region may be referred to as average brightness of the fourth region.

According to the image display method provided in this application, a higher degree of dynamic range expansion is performed on an image not including a face, and a lower degree of dynamic range expansion is performed on an image including a face. For example, image content displayed in the preview region 120 on the user interface 12 and image content displayed in the preview region 130 on the user interface 13 remain unchanged except for a face. For example, the image content shows a same wall lamp, and the wall lamps are all in the turned-on state. In this case, the average brightness N1 of the wall lamp region in the preview region 120 is greater than or equal to the average brightness M1 of the wall lamp region in the preview region 130, and the average brightness M2 of the non-wall lamp region in the preview region 120 is less than or equal to the average brightness M2 of the non-wall lamp region in the preview region 130.

It should be understood that a larger dynamic range indicates more distinct information such as lines in a region corresponding to the dynamic range. However, a clear state presented in a face region at a large dynamic range does not conform to common user aesthetics. Therefore, in this application, appropriate dynamic range expansion performed on the image including a face can ensure that a presentation effect of the face region is not affected while the dynamic range of the image is enlarged, different requirements of users on an image including a face and an image not including a face can be satisfied, and user experience can be improved.

The preview images (for example, the image displayed in the preview region 120 in FIG. 1B and the image displayed in the preview region 130 in FIG. 1C) displayed on the preview interface are displayed by the electronic device according to the image display method provided in this application.

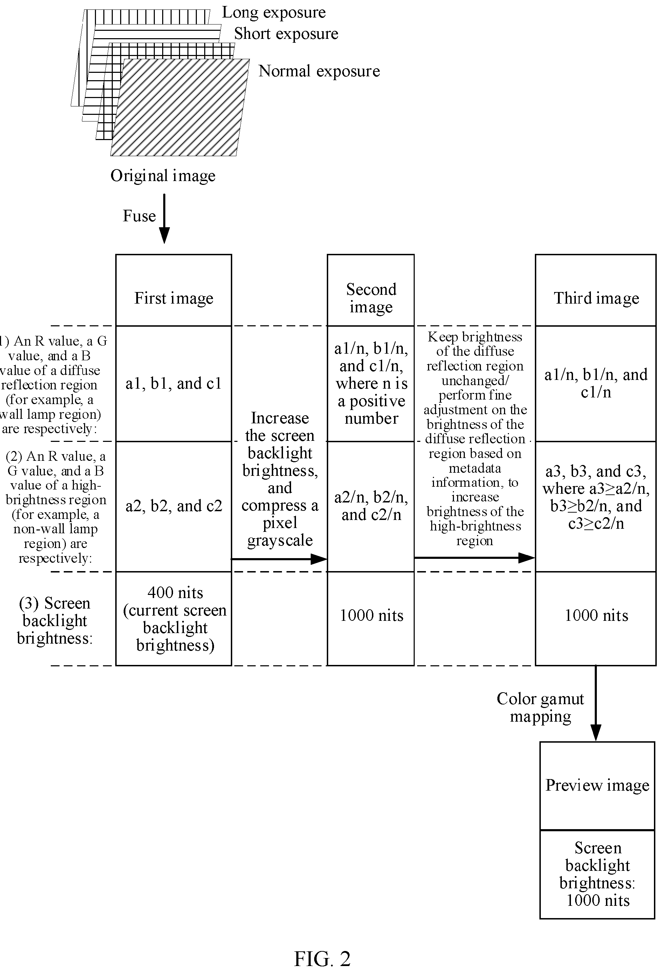

The following describes an overall procedure of the image display method provided in this application by using FIG. 2. For example, displaying one image frame in a preview scene is used as an example for description.

First, an electronic device first obtains an original image corresponding to the image frame by using a camera. Different patterns are used for representing different exposure levels in FIG. 2. For example, the original image may include a plurality of raw image frames with different exposure levels, such as an ultra-short exposure frame, an ultra-long exposure frame, and a normal exposure frame. Further, the electronic device performs fusion processing (such as multi-exposure fusion, white balance correction, and color gamut conversion) on the original image, to obtain a color image (for ease of description, referred to as a first image) corresponding to the original image.

It should be understood that the original image is an output image of the camera, that is, original data obtained by the camera by converting acquired light information reflected by an object into a digital image signal, and the original data is not processed. For example, the original image may be raw format data. The raw format data may include information about the object and camera parameters. The camera parameters may include a shutter speed, an aperture value, white balance, and the like.

FIG. 2 shows an example in which an R value, a G value, and a B value of a diffuse reflection region (for example, a wall lamp region) in image data corresponding to the first image are respectively a1, b1, and c1, where a1, b1, and c1 are positive numbers; an R value, a G value, and a B value of a high-brightness region (for example, a non-wall lamp region) are respectively a2, b2, and c2, where a2, b2, and c2 are positive numbers; and current screen backlight brightness is 400 nits (nits). For division of the diffuse reflection region and the high-brightness region, refer to related descriptions below. Details are not described herein.

Further, the electronic device can improve screen backlight brightness; and compress a pixel grayscale of the first image, to obtain image data corresponding to a second image. In other words, R values, G values, and B values of a diffuse reflection region and a high-brightness region in the image data corresponding to the second image are respectively obtained by compressing the R values, the G values, and the B values of the diffuse reflection region and the high-brightness region in the image data corresponding to the first image. An example in which a compression factor is n is used for description. n is a positive number. The R value, the G value, and the B value in the image data corresponding to the second image are respectively 1/n of a1, 1/n of b1, and 1/n of c1, that is, a1/n, b1/n, and c1/n. The R value, the G value, and the B value of the high-brightness region in the first image are respectively 1/n of a2, 1/n of b2, and 1/n of c2, that is, a2/n, b2/n, and c2/n. FIG. 2 shows an example in which screen backlight brightness in the image data corresponding to the second image is 1000 nits. The compression factor (that is, n) for compressing a pixel grayscale and a boost factor of the screen backlight brightness are not limited in this application. It may be understood that the screen backlight brightness is increased to a maximum of a preset maximum value.

Further, the electronic device may keep brightness of the diffuse reflection region in the second image unchanged/perform fine adjustment on the brightness of the diffuse reflection region in the second image based on metadata (matedata) information, to increase brightness of the high-brightness region, so as to obtain a third image. An R value, a G value, and a B value in image data corresponding to the third image may be the same as the R value, the G value, and the B value of the second image, or may have a deviation within a preset difference with the R value, the G value, and the B value of the second image. An R value, a G value, and a B value of a high-brightness region in the third image are respectively a3, b3, and c3, where a3≥a2, b3≥b2, and c3≥c2. Screen backlight brightness in the image data corresponding to the third image is the same as the screen backlight brightness of the second image, and is still 1000 nits.

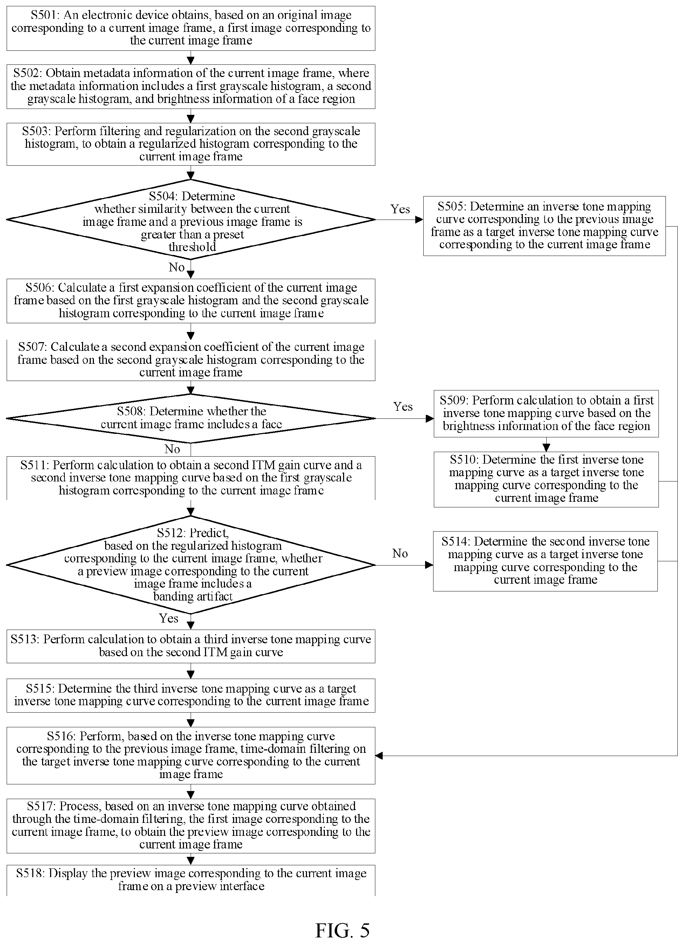

Finally, the electronic device may perform color gamut mapping on the third image, to obtain a preview image. The electronic device may display the preview image on the preview interface (such as FIG. 1B and FIG. 1C). For example, for a specific process in which the electronic device obtains the preview image, refer to related content in the embodiment shown in FIG. 5 below.

**The following describes a form, a software architecture, and a hardware architecture of the electronic device provided in embodiments of this application.**

The electronic device may be a portable terminal device equipped with an iOS^{®}, Android^{®}, Microsoft^{®}, or another operating system, such as a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device.

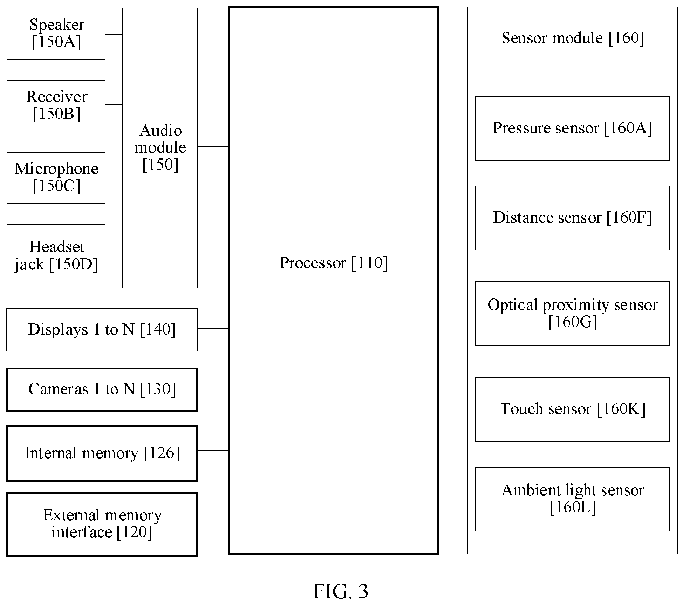

FIG. 3 is a schematic diagram of a hardware structure of an electronic device according to an embodiment of this application.

As shown in FIG. 3, the electronic device 100 may include a processor 110, an external memory interface 120, an internal memory 126, a camera 130, a display 140, an audio module 150, a speaker 150A, a receiver 150B, a microphone 150C, a headset jack 150D, and a sensor module 160. The sensor module 160 may include a pressure sensor 160A, a distance sensor 160F, an optical proximity sensor 160G, a touch sensor 160K, an ambient light sensor 160L, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate devices, or may be integrated into one or more processors.

The controller may be a nerve center and a command center of the electronic device. The controller may generate an operation control signal based on an instruction operation code and a time sequence signal, to complete control of instruction fetching and instruction execution.

A memory may be further disposed in the processor 110, to store instructions and data. In some embodiments, the memory in the processor 110 is a cache memory. The memory may store instructions or data recently used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

In embodiments of this application, the processor 110 may be configured to perform the foregoing embodiments, to implement the image display method provided in this application.

It may be understood that, an interface connection relationship between the modules illustrated in embodiments of this application is merely an example for description, and does not constitute a limitation on the structure of the electronic device. In some other embodiments of this application, the electronic device may alternatively use an interface connection manner different from that in the foregoing embodiments, or use a combination of a plurality of interface connection manners.

The internal memory 126 may include one or more random access memories (random access memory, RAM), and one or more non-volatile memories (non-volatile memory, NVM).

The electronic device implements a display function through the GPU, the display 140, the application processor, and the like. The GPU is a microprocessor for image processing, and connects the display 140 and the application processor. The GPU is configured to perform mathematical and geometric calculation for graphic rendering. The processor 110 may include one or more GPUs that execute program instructions to generate or change display information.

The display 140 is configured to display an image, a video, or the like. The display 140 includes a display panel. The display panel may be a liquid crystal display (liquid crystal display, LCD). The display panel may alternatively be an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diodes, QLED), or the like. In some embodiments, the electronic device may include 1 or N displays 140, where N is a positive integer greater than 1.

The electronic device may implement a shooting function through the ISP, the camera 130, the video codec, the GPU, the display 140, the application processor, and the like.

The ISP is configured to process data fed back by the camera 130. The camera 130 is configured to capture a static image or a video. In some embodiments, the electronic device may include 1 or N cameras 130, where N is a positive integer greater than 1. In embodiments of this application, the camera 130 may be a telephoto camera, a main camera, a wide-angle camera, or the like.

The digital signal processor is configured to process a digital signal, and may process another digital signal in addition to a digital image signal. For example, when the electronic device performs frequency selection, the digital signal processor is configured to perform Fourier transform or the like on frequency energy.

The video codec is configured to compress or decompress a digital video. The electronic device may support one or more video codecs. In this way, the electronic device may play or record videos in a plurality of encoding formats, for example, moving picture experts group (moving picture experts group, MPEG)1, MPEG2, MPEG3, and MPEG4.

The NPU is a neural-network (neural-network, NN) computing processor, which quickly processes input information by learning from a structure of a biological neural network, for example, a mode of transmission between neurons in a human brain, and may further continuously perform self-learning. Applications such as intelligent cognition of the electronic device, for example, image recognition, facial recognition, speech recognition, and text understanding, may be implemented by using the NPU.

The electronic device may implement an audio function through the audio module 150, the speaker 150A, the receiver 150B, the microphone 150C, the headset jack 150D, the application processor, and the like, for example, implement music playing or sound recording.

The structure shown in embodiments of this application does not constitute a specific limitation on the electronic device. In some other embodiments of this application, the electronic device may include more or fewer components than those shown in the figure, some components may be combined, some components may be split, or different component arrangements may be used. The components shown in the figure may be implemented by hardware, software, or a combination of software and hardware. For example, the electronic device may further include a key, a motor, an indicator, a subscriber identity module (subscriber identification module, SIM) card interface, and the like. For another example, the sensor module may further include a gyroscope sensor, a barometric pressure sensor, a magnetic sensor, an acceleration sensor, a fingerprint sensor, a temperature sensor, a bone conduction sensor, and the like.

In this embodiment of this application, the electronic device may perform, through the processor 110, the image display method provided in this application, and display, through the display 140, a preview image obtained by performing the image display method provided in this application.

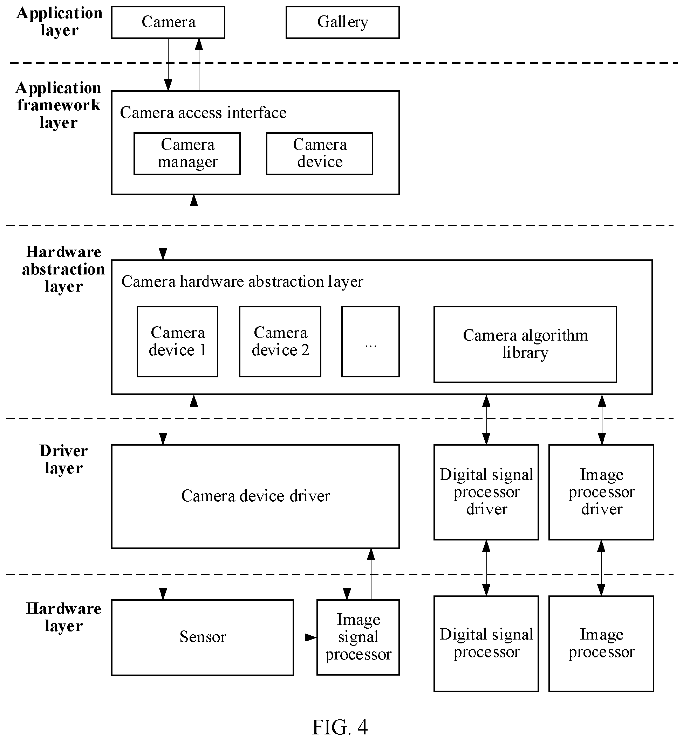

**FIG. 4** **is a schematic diagram of software and hardware structures of an electronic device according to an embodiment of this application.**

In a layered architecture, a system is divided into a plurality of layers, and each layer has a clear role and task. The layers communicate with each other through a software interface. In some embodiments, the system is divided into five layers from top to bottom: an application layer, an application framework layer, a hardware abstraction layer, a driver layer, and a hardware layer.

The application layer may include a series of application packages. As shown in FIG. 4, the application layer may include applications (also referred to as apps) such as camera and gallery. The application layer may further include apps such as calendar, phone, maps, navigation, WLAN, Bluetooth, music, video, and messages (not shown in FIG. 4).

The camera application is configured to display a preview interface. For a process in which a user opens the camera application, refer to related interfaces in FIG. 1A to FIG. 1C. The gallery app is configured to display an image, a video, or the like stored in the electronic device.

In this embodiment of this application, the electronic device may display, through the preview interface of the camera application, a preview image obtained by using the image display method provided in this application.

The application framework layer provides an application programming interface (application programming interface, API) and a programming framework for the applications in the application layer. The application framework layer includes some predefined functions. In this embodiment of this application, the application framework layer may include a camera access interface, and the camera access interface may include a camera manager and a camera device. The camera access interface is configured to provide an application programming interface and a programming framework for the camera application.

The hardware abstraction layer is an interface layer located between the application framework layer and the driver layer, and provides a virtual hardware platform for an operating system. In this embodiment of this application, the hardware abstraction layer may include a camera hardware abstraction layer and a camera algorithm library.

The camera hardware abstraction layer may provide virtual hardware for a camera device 1, a camera device 2, or more camera devices, and the camera algorithm library. The camera algorithm library may include running code and data for implementing the image display method provided in embodiments of this application.

For example, the camera hardware abstraction layer may process an original image, to obtain a preview image and a preview video after dynamic range expansion.

The driver layer is a layer between hardware and software. The driver layer includes various hardware drivers. The driver layer may include a camera device driver, a digital signal processor driver, an image processor driver, and the like.

The camera device driver is configured to drive a sensor of a camera to acquire an image, and drive an image signal processor to preprocess the image. The digital signal processor driver is configured to drive a digital signal processor to process the image. The image processor driver is configured to drive a graphics processing unit to process the image.

**The following specifically describes the image display method in embodiments of this application with reference to the system structure.**

In response to an operation of the user opening the camera application, for example, an operation of tapping an icon of the camera application, the camera application invokes the camera access interface of the application framework layer, to start the camera application, and further, the camera device (the camera device 1 and/or another camera device) in the camera hardware abstraction layer is invoked to send an instruction for starting the camera. The camera hardware abstraction layer sends the instruction to the camera device driver at a kernel layer. The camera device driver may start a corresponding camera sensor, and the sensor acquires an image light signal. One camera device at the camera hardware abstraction layer corresponds to one camera sensor at the hardware layer.

Then, the camera sensor may transmit the acquired image light signal to the image signal processor for preprocessing, to obtain an image electrical signal (an original image), and transmit the original image to the camera hardware abstraction layer through the camera device driver.

The camera hardware abstraction layer may send the original image to the camera algorithm library. The camera algorithm library stores program code for implementing the image display method provided in embodiments of this application. The code is executed based on the digital signal processor, the image processor, and the camera algorithm library, to implement the foregoing described capabilities such as the "HDR preview".

The camera algorithm library may send an identified original image acquired by the camera to the camera hardware abstraction layer. Then, the camera hardware abstraction layer processes the original image by using the camera algorithm library, to obtain the preview image, and sends the preview image for display. In this way, the camera application may display the preview image on a preview window.

It should be noted that, the diagram of the software structure of the electronic device shown in FIG. 4 provided in this application is merely used as an example.

Specific module division at different layers in an Android operating system is not limited. For details, refer to descriptions to a software structure of the Android operating system in a conventional technology. In addition, the image display method provided in this application may alternatively be implemented based on another operating system. Examples are not provided one by one in this application.

Based on the user interface displayed on the electronic device and the software and hardware structures of the electronic device, the following describes the image display method provided in embodiments of this application.

The image display method provided in embodiments of this application is described with reference to FIG. 5. The method includes the following steps.

**S501: An electronic device obtains, based on an original image corresponding to a current image frame, a first image corresponding to the current image frame.**

For example, when detecting a user operation for opening a camera application, the electronic device may acquire, in real time by using a camera, an original image corresponding to each image frame. The original image may include a plurality of raw image frames with different exposure levels, such as an ultra-short exposure frame, an ultra-long exposure frame, and a normal exposure frame. In this embodiment of this application, the current image frame is used as an example for description. After acquiring the original image corresponding to the current image frame, the electronic device obtains, based on the original image, the first image corresponding to the current image frame.

For a specific implementation of obtaining the first image corresponding to the current image frame, refer to the foregoing related content in FIG. 2. Details are not described herein again.

**S502: The electronic device obtains metadata information of the current image frame, where the metadata information includes a first grayscale histogram, a second grayscale histogram, and brightness information of a face region.**

In an implementation, the electronic device may obtain the metadata information of the current image frame based on the original image, the first image, a camera parameter, and the like. The metadata information may include the following:
(1) the first grayscale histogram (which may also be referred to as AE hist), where the first grayscale histogram is a grayscale histogram obtained through calculation based on a grayscale histogram of a normally exposed raw image or a grayscale histogram of an image obtained by fusing a plurality of raw image frames with different exposure levels;
(2) the second grayscale histogram (which may also be referred to as Yhist), where the second grayscale histogram is a histogram of an output image synthesized from a plurality of image frames with different exposure levels or an SDR image (for example, the first image);
(3) a zoom ratio (Zoon Ratio); and
(4) a face automatic exposure value (face auto exposure value), which may also be referred to as brightness information of a face region (faceAEValue, FaceEV), where a larger FaceEV value indicates lower brightness of the face region, and a smaller FaceEV value indicates higher brightness of the face region.

**S503: The electronic device performs filtering and regularization on the second grayscale histogram, to obtain a regularized histogram corresponding to the current image frame.**

Optionally, the electronic device may perform filtering on the second grayscale histogram in a manner of mean filtering or Gaussian filtering. A filtering method is not limited in this embodiment of this application.

Further, the electronic device may perform regularization on a grayscale histogram obtained through the filtering, to obtain a regularized histogram. The regularized histogram includes a regularization value corresponding to each grayscale.

For example, a regularization process may be expressed in the following formula:${H}_{norm \left(j\right)} = \left({H}_{\left(j\right)}-{H}_{m}\right) / {H}_{m} ,$ where *Hₘ* = *mean*(*H*).

j is any grayscale in the grayscale histogram obtained through the filtering. H_{(*j*)} is a quantity of pixels of the grayscale j. *H*_{*norm*(*j*)} is a regularization value corresponding to the grayscale j. *H* is a histogram obtained by filtering the second grayscale histogram.

**S504: The electronic device determines whether similarity between the current image frame and a previous image frame is greater than a preset threshold. If the similarity between the current image frame and the previous image frame is greater than the preset threshold, step S505 is performed. If the similarity between the current image frame and the previous image frame is not greater than the preset threshold, step S506 is performed.**

In some embodiments, the electronic device may determine the similarity between the current image frame and the previous image frame based on the regularized histogram corresponding to the current image frame and a regularized histogram corresponding to the previous image frame. For a calculation manner of the regularized histogram corresponding to the previous image frame, refer to step S3. Details are not described herein again.

For example, a calculation formula for the similarity *Coh* may be as follows:
$Coh = \frac{2 ∗ \sum {H}_{last} ∗ {H}_{current}}{\sum {H}_{last}^{2} + \sum {H}_{current}^{2}}$,

*Hₗₐₛₜ* is a histogram obtained by processing the regularized histogram corresponding to the previous image frame. *H_{current}* is a histogram obtained by processing the regularized histogram corresponding to the current image frame.

For example, a regularization value corresponding to each grayscale of the regularized histogram corresponding to the previous image frame is processed by using the following formulas, and *Hₗₐₛₜ* can be obtained. A regularization value corresponding to each grayscale of the regularized histogram corresponding to the current image frame is processed by using the following formulas, and *H_{current}* can be obtained. The formulas are as follows:${H}_{x 2} = maximum \left({H}_{x 1}, Th1\right) ;$ and${H}_{x 3} = {{e}^{H}}^{{}_{x 2}} .$

*H*_{*x*1} is the regularization value corresponding to each grayscale. *H*_{*x*3} is a value obtained by processing the regularization value corresponding to each grayscale. *Th*1 is a preset value. For example, *Th*1 may be any value from 2 to 4.

It should be understood that images in a preview process are continuous. For example, when there is no scene switching, video content changes slightly. An ITM curve obtained through calculation based on the previous image frame is used, so that a calculation amount can be reduced.

**S505: The electronic device determines an inverse tone mapping curve corresponding to the previous image frame as a target inverse tone mapping curve corresponding to the current image frame.**

In some embodiments, when determining that the similarity between the current image frame and the previous image frame is greater than the preset threshold, the electronic device determines the inverse tone mapping curve corresponding to the previous image frame as the target inverse tone mapping curve corresponding to the current image frame.

**S506: The electronic device calculates a first expansion coefficient of the current image frame based on the first grayscale histogram and the second grayscale histogram corresponding to the current image frame.**

In some embodiments, when determining that the similarity between the current image frame and the previous image frame is not greater than the preset threshold, the electronic device calculates the first expansion coefficient of the current image frame based on the first grayscale histogram and the second grayscale histogram corresponding to the current image frame.

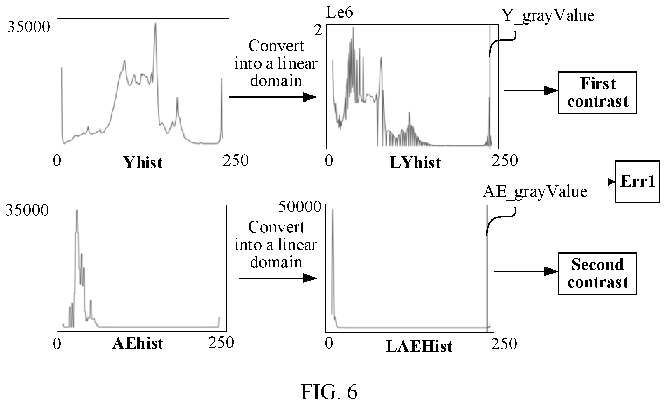

For example, with reference to FIG. 6, an implementation of calculating the first expansion coefficient of the current image frame is described by using S5061 to S5063.

S5061: The electronic device may convert the first grayscale histogram (Yhist) and the second grayscale histogram (AEhist) from a non-linear domain into a linear domain, to obtain a first linear domain histogram (LYhist) and a second linear domain histogram (LAEhist).

FIG. 6 shows examples of histograms before and after Yhist and AEhist are converted from non-linear domains into linear domains.

S5062: The electronic device separately calculates expectations corresponding to a low-brightness region and a high-brightness region in LYhist and expectations corresponding to a low-brightness region and a high-brightness region in LAEhist, to obtain the expectation (Y_meanL) corresponding to the low-brightness region in LYhist, the expectation (Y_meanH) corresponding to the high-brightness region in Yhist, the expectation (AE_meanL) corresponding to the low-brightness region in LAEhist, and the expectation (AE_meanH) corresponding to the high-brightness region in LAEhist.

The first linear domain histogram (LYhist) is used as an example for description.

First, the electronic device may accumulate, starting from a low grayscale to a high grayscale (for example, starting from a grayscale of 0), a probability of a quantity of pixels corresponding to each grayscale in the first linear domain histogram; when an accumulated probability is greater than a preset probability Prob (such as 0.95), determine a current grayscale as a gray scale threshold (which may also be denoted as Y_grayValue), where the probability of the quantity of pixels corresponding to each grayscale may be a proportion of the quantity of pixels corresponding to the grayscale in a quantity of all pixels in an image; divide, based on the gray scale threshold, the first linear domain histogram into a histogram (LYhist [0 to Y_grayValue]) corresponding to the low-brightness region and a histogram (LYhist [Y_grayValue to 255]) corresponding to the high-brightness region, where the histogram corresponding to the low-brightness region is a histogram region corresponding to a grayscale lower than the grayscale threshold, and the histogram corresponding to the high-brightness region is a histogram region corresponding to a grayscale not lower than the grayscale threshold; calculate an expectation corresponding to the histogram corresponding to the low-brightness region, to obtain (Y_meanL) corresponding to the low-brightness region; and calculate an expectation corresponding to the histogram corresponding to the high-brightness region is calculated, to obtain the expectation (Y_meanH) corresponding to the high-brightness region.

Similarly, the electronic device may calculate AE_grayValue, AE_meanL, and AE_meanH in LAEHist. A preset probability used for calculating AE_grayValue in LAEHist may be the same as a preset probability used for calculating Y_grayValue in LYhist.

FIG. 6 shows examples of locations of Y_grayValue and AE_grayValue.

S5063: The electronic device obtains the first expansion coefficient based on the expectations corresponding to the low-brightness region and the high-brightness region in LYhist and the expectations corresponding to the low-brightness region and the high-brightness region in LAEhist.

In some embodiments, the electronic device may calculate a ratio of the expectation corresponding to the low-brightness region in LYhist and the expectation corresponding to the high-brightness region in LYhist, to obtain first contrast; calculate a ratio of the expectation corresponding to the low-brightness region in LAEhist to the expectation corresponding to the high-brightness region in LAEhist, to obtain second contrast; and determine a product of the first contrast and the second contrast as the first expansion coefficient.

For example, a formula for calculating the first expansion coefficient (*Err*1) by the electronic device may be as follows: $Err 1 = \frac{Y _ meanL}{Y _ meanH} ∗ \frac{AE _ meanH}{AE _ meanL} .$

The first contrast in FIG. 6 may be $\frac{Y _ meanL}{Y _ meanH}$, and the second contrast in FIG. 6 may be $\frac{AE _ meanH}{AE _ meanL}$.

**S507: The electronic device calculates a second expansion coefficient of the current image frame based on the second grayscale histogram corresponding to the current image frame.**

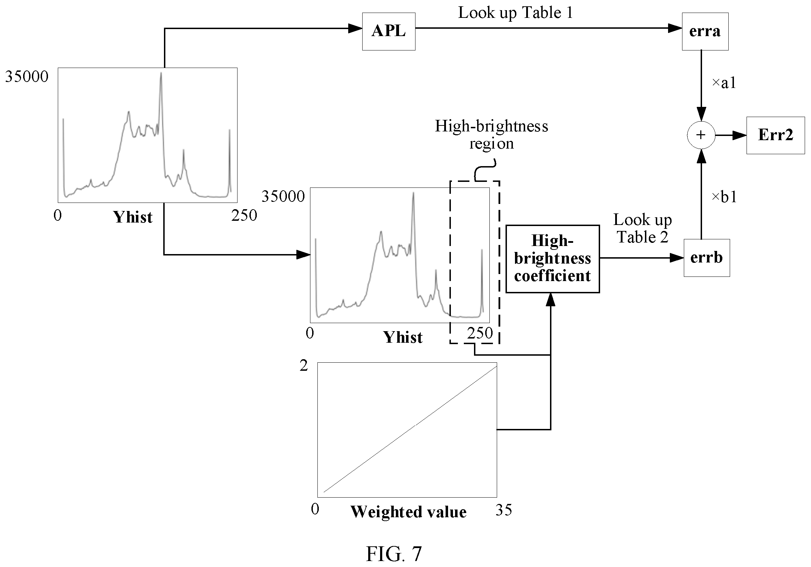

For example, with reference to FIG. 7, an implementation of calculating the second expansion coefficient of the current image frame is described by using S5071 to S5073.

S5071: Determine a first coefficient based on an average pixel level of the current image frame, where the average pixel level is obtained based on the second grayscale histogram.

In an implementation, the electronic device may calculate the average pixel level (APL) of the current image frame based on the second grayscale histogram; and when the average pixel level is less than a preset threshold, determine a first preset coefficient as the first coefficient; or when the average pixel level is not less than the preset threshold, determine a second preset coefficient corresponding to the average pixel level as the first coefficient (*erra*). The average pixel level is negatively correlated with the second preset coefficient corresponding to the average pixel level. The first preset coefficient is greater than the second preset coefficient corresponding to the average pixel level.

For example, the foregoing process of determining the first coefficient based on the average pixel level of the current image frame may be determined by using the following piecewise function: $erra = \left\{\begin{matrix}ErrMaxTh , & apl < Th _ apl \\ k ∗ apl + b 0 , & apl \geq Th _ apl\end{matrix}\right. .$

*erra* is the first coefficient. *apl* is the average pixel level. *ErrMaxTh* is a maximum preset expansion coefficient (that is, the first preset coefficient). *Th_apl* is the preset threshold. k<0, and b>0.

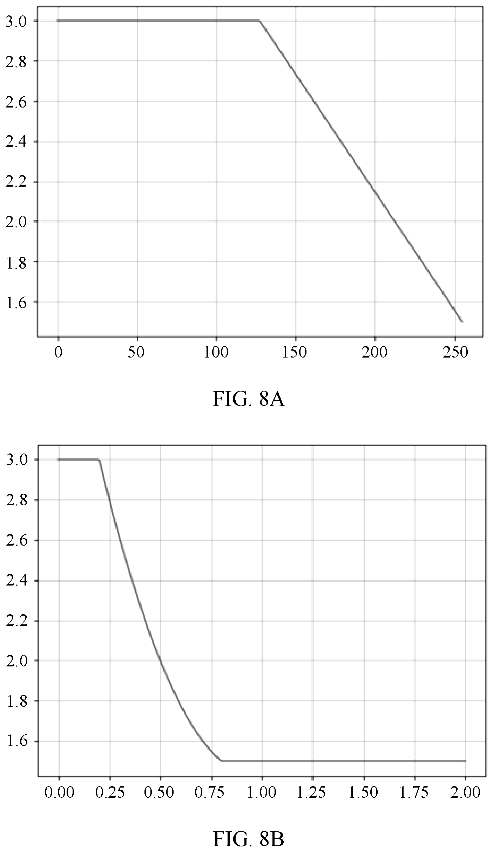

It should be noted that the foregoing piecewise function may alternatively be presented in a form of a table. As shown in Table 1 shown in FIG. 8A, a horizontal axis is *apl,* and a vertical axis is *erra.* After *apl* is obtained through calculation, *erra* may be looked up in Table 1 based on *apl.*

It may be understood that a larger average pixel level indicates higher overall brightness of the current image frame. In this embodiment of this application, when the average pixel level is greater than the preset threshold, the first coefficient is reduced, so that excessive brightness of the image after dynamic range expansion can be avoided.

S5072: Determine a second coefficient based on distribution of a high-brightness region in the current image frame.

In an implementation, the electronic device may first determine a region where a grayscale is greater than a preset value (for example, the grayscale is greater than 220) in the second grayscale histogram corresponding to the current image frame as a histogram corresponding to the high-brightness region; and perform weighted summation on a quantity of pixels corresponding to grayscales in the histogram (for example, a grayscale with a higher gray scale corresponds to a higher weight), to obtain a high-brightness coefficient, where the high-brightness coefficient represents the distribution of the high-brightness region in the current image frame; and determine the second coefficient based on the high-brightness coefficient.

For example, the electronic device may determine the second coefficient based on the high-brightness coefficient by using the following piecewise function: $errb = \left\{\begin{matrix}ErrMaxTh , & {H}_{factor} < ThL \\ a ∗ {{H}_{factor}}^{2} + b ∗ {H}_{factor} + c , & ThL \leq {H}_{factor} \leq ThH \\ ErrMinTh , & {H}_{factor} > ThH\end{matrix}\right. .$

*errb* is the second coefficient. *ErrMaxTh, ErrMinTh, ThL,* and *ThH* are preset parameters. *ErrMaxTh>ErrMinTh.* A maximum value of *a * H_{factor}*² *+ b * H_{factor} + c* is less than *ErrMaxTh.* A minimum value of *a * H_{factor}*² *+ b * H_{factor} + c* is greater than *ErrMinTh.*

It should be noted that the foregoing piecewise function may alternatively be presented in a form of a table. As shown in Table 2 shown in FIG. 8B, a horizontal axis is *H_{factor},* and a vertical axis is *errb*. After *H_{factor}* is obtained through calculation, *errb* may be looked up in Table 2 based on *apl*.

It may be understood that the high-brightness coefficient represents the distribution of the high-brightness region (or a proportion of the high-brightness region) in the current image frame, to be specific, a larger high-brightness coefficient indicates a larger distribution area of the high-brightness region in the image, and a smaller high-brightness coefficient indicates a smaller distribution area of the high-brightness region in the image. In this embodiment of this application, when the distribution area of the high-brightness regions is large, a small second coefficient is used, so that an excessively large high-brightness region in the image after dynamic range expansion can be avoided.

S5073: Determine the second expansion coefficient based on the first coefficient and the second coefficient. $Err 2 = erra ∗ a 1 + errb ∗ b 1 .$

*a*1 and *b*1 are preset coefficients.

In this embodiment of this application, the second expansion coefficient may be used to avoid poor user experience caused by an excessively bright image or a large high-brightness region of the image.

**S508: The electronic device determines whether the current image frame includes a face. If the current image frame includes a face, S509 is performed. If the current image frame does not include a face, S511 is performed.**

**S509: The electronic device performs calculation to obtain a first inverse tone mapping curve based on the brightness information of the face region.**

In an implementation, when determining that a current preview scene is a face scene, the electronic device may determine, based on FaceEV in metadata, an expansion coefficient corresponding to the face, where FaceEV is positively correlated with the expansion coefficient corresponding to the face; determine, based on the expansion coefficient corresponding to the face, an ITM gain curve (a first ITM gain curve for short) corresponding to the face scene; and obtain the first inverse tone mapping curve based on the first ITM gain curve.

For example, the electronic device may determine the expansion coefficient corresponding to the face by using the following formula: ${Err}_{face} = \frac{a _ p}{1 + b _ p ∗ {e}^{- ev ∗ c _ p + d _ p}} + ErrMinTh .$

*Err_{face}* is the expansion coefficient corresponding to the face. *ev* is FaceEV. *aₚ* = *Errₚₑᵣₛₒₙ* - *ErrMinTh*. *b_p* , *c_p*, *d_p* , *ErrMinTh* , and *Errₚₑᵣₛₒₙ* are preset coefficients. *Errₚₑᵣₛₒₙ* is a maximum value of a preset expansion coefficient for the face scene.

It should be understood that a larger FaceEV value indicates lower brightness of the face region, and FaceEV is positively correlated with *Err_{face}*. In this case, lower brightness of the face region indicates greater *Err_{face},* and higher brightness of the face region indicates smaller *Err_{face}.* In this embodiment of this application, it is set that *ErrMinT<Err_{face}<Errₚₑᵣₛₒₙ,* and *ev* is positively correlated with *Err_{face},* so that a dynamic range of an image may be flexibly adjusted based on the brightness of the face region, and an adjustment range is ensured to be kept within an appropriate range.

For example, the ITM gain curve (the first ITM gain curve for short) corresponding to the face scene is as follows: ${f}_{gain 1} = pa ∗ {e}^{x} ∗ x + pb ∗ x .$

*x* is a grayscale (0 to 1) of the first image after normalization. *pa* and pb are preset coefficients.

For example, the first inverse tone mapping curve *f*_{*itm*1} may be as follows: ${f}_{itm 1} = x ∗ \left({f}_{gain 1}+1\right) ∗ C ;$ $C = 1 / {Err}^{1 / 2.2} ;$ $Err ′ = min \left(Err1,Err2,{Err}_{face},Err_res\right) ; and$ $Err = max \left(Err′,1\right) .$

*Err_res* is a screen headroom. For example, maximum screen brightness is 1000 nits, current screen brightness is 200 nits, and *Err_res=*1000/200*.*

In this embodiment of this application, when the current image frame includes a face, a corresponding expansion coefficient is preset for the face, to avoid that the face region does not satisfy user requirements when a dynamic range is excessively large and contrast is excessively high.

**S510: The electronic device determines the first inverse tone mapping curve as the target inverse tone mapping curve corresponding to the current image frame.**

In some embodiments, when determining that the current image frame includes a face, the electronic device performs calculation to obtain the first inverse tone mapping curve based on the brightness information of the face region; determines the first inverse tone mapping curve obtained through the calculation as the target inverse tone mapping curve corresponding to the current image frame; and processes the first image by using the target inverse tone mapping curve. For details, refer to the following steps S516 to S518.

**S511: The electronic device performs calculation to obtain a second ITM gain curve and a second inverse tone mapping curve based on the first grayscale histogram corresponding to the current image frame.**

In an implementation, when the current image frame does not include a face, the electronic device divides the current image frame into a plurality of regions, where the plurality of regions correspond to different brightness ranges; sets different coefficients for the plurality of regions, where brightness of a region is inversely proportional to a coefficient, and the coefficient corresponding to the region represents magnitude of dynamic range expansion for the region; and determines the second inverse tone mapping curve based on coefficients of different regions.

For example, an implementation of performing calculation to obtain the second inverse tone mapping curve is described by using the following S5101 to S5105.

S5101: Calculate a first grayscale and a second grayscale based on Yhist of the current image frame.

For example, a method used by the electronic device to perform division to obtain different regions may be: calculating the average pixel level based on Yhist of the current image frame; determining the first grayscale based on the average pixel level; performing calculation on a part with a grayscale higher than the first grayscale by using an OSTU algorithm, to obtain an OSTU; and determining the second grayscale based on the OSTU.

For example, the first grayscale and the second grayscale may be determined by using the following formula: $X 1 = max \left(APL,Thx1\right) , X 2 = max \left(OSTU,Thx2\right) .$

X1 is the first grayscale. X2 is the second grayscale. Thx1 and Thx2 are preset parameters.

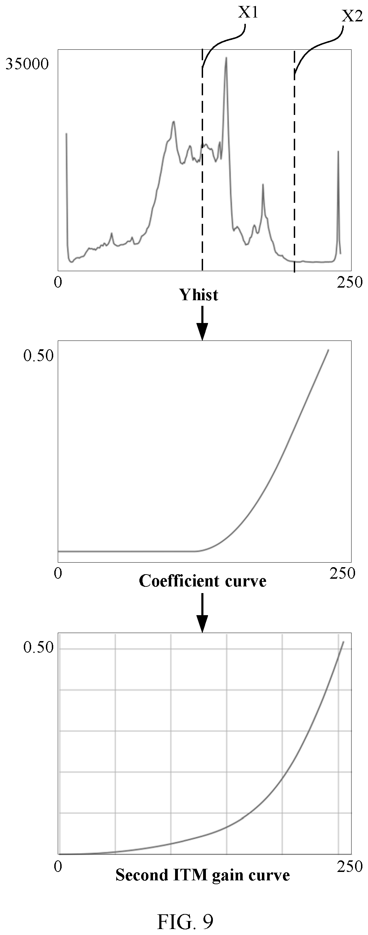

FIG. 9 shows examples of positions of the first grayscale X1 and the second grayscale X2 in Yhist of the current image frame.

S5102: Perform division to obtain different brightness parts based on the first grayscale and the second grayscale.

Further, the electronic device may divide, based on X1 and X2, a Yhist curve into three parts: a low-brightness part, a medium-brightness part, and a high-brightness part, to be specific, *x* ≤ *X1* is the low-brightness part, *X*1 < *x < X*2 is the medium-brightness part, and *x* ≥ *X* is the high-brightness part.

S5103: Determine coefficients corresponding to the different brightness parts.

Further, the electronic device may perform calculation to obtain a coefficient curve based on X1 and X2.

The following shows an example of a calculation formula for the coefficient curve *fₓₛ*: ${f}_{xs} = \left\{\begin{matrix}v 1 , & x \leq X 1 \\ a 2 ∗ {x}^{3} + b 2 ∗ {x}^{2} + c 2 ∗ x + d 2 , & X 1 < x < X 2 \\ v 2 + k 1 ∗ x , & x \geq X 2\end{matrix}\right. .$

*v*1 and *v*2 are preset parameters, and *x* is a pixel grayscale of the first image.

For example, a method for solving coefficients in the coefficient curve may include the following steps. Step S1: Calculate *gain* based on *Err* (*Err* = min(*Err*1, *Err2, Err*_*res*)), where *gain = Err*^{1/2.2} - 1. Step S2: Solve k1 by using *v*1+*k*1/2*(x2-x1)+*k*1*(1-x2)=gain. Step S3: Solve *a*2*, b2, c2, and* d2 based on function continuity and slope continuity.

S5104: Determine the second ITM gain curve based on the coefficients corresponding to the different brightness parts.

For example, the electronic device may perform calculation to obtain the second ITM gain curve *f*_{*gain*2} based on the coefficient curve *fₓₛ* by using the following formula: ${f}_{gain 2} = {f}_{xs} ∗ {x}^{2.2} .$

FIG. 9 shows examples of the coefficient curve *fₓₛ* and the second ITM gain curve *f*_{*gain*2}.

S5105: Determine the second inverse tone mapping curve based on the second ITM gain curve.

For example, a formula of the second inverse tone mapping curve may be as follows: ${f}_{itm 2} = x ∗ C ∗ \left({f}_{gain 2}+1\right) ;$ $C = 1 / {Err}^{1 / 2.2} ;$ $Err ′ = min \left(Err1,Err2,Err_res\right) ; and$ $Err = max \left(Err′,1\right) .$

**S512: The electronic device predicts, based on the regularized histogram corresponding to the current image frame, whether a preview image corresponding to the current image frame includes a banding artifact. If the preview image corresponding to the current image frame includes a banding artifact, step S513 is performed. If the preview image corresponding to the current image frame does not include a banding artifact, S514 is performed.**

In some embodiments, when determining that the current image frame does not include a face, the electronic device determines whether a banding artifact may exist in the preview image corresponding to the current image frame. If a banding artifact exists in the preview image corresponding to the current image frame, step S513 is performed, to be specific, the second inverse tone mapping curve obtained through calculation in S511 is determined as the target inverse tone mapping curve corresponding to the current image frame. If a banding artifact does not exist in the preview image corresponding to the current image frame, S514 is performed, to be specific, a corresponding third inverse tone mapping curve including the banding artifact is obtained through calculation.

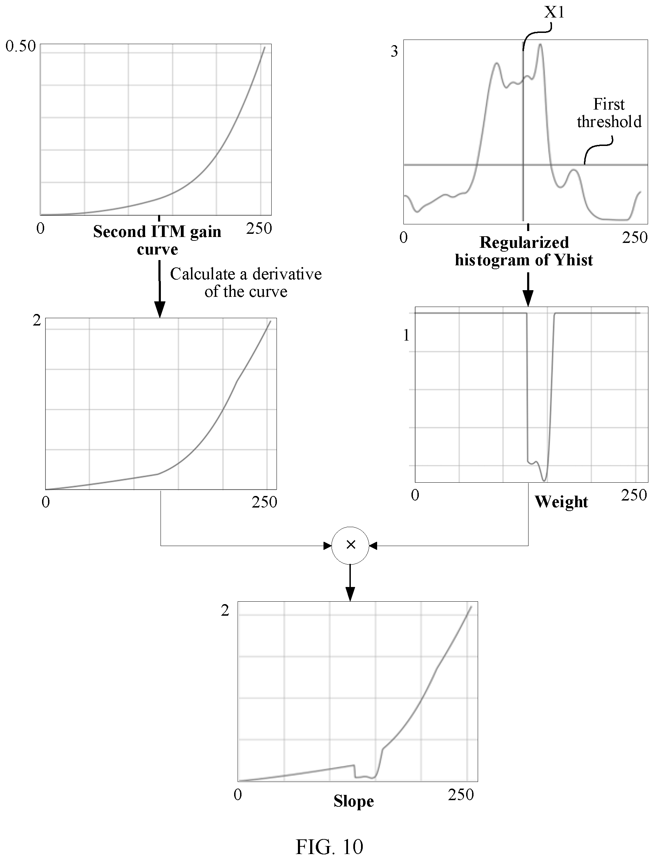

In an implementation, if a proportion of a quantity of pixels of a grayscale in the high-brightness region exceeds a preset quantity, the electronic device may predict that the banding artifact exists in the preview image corresponding to the current image frame. If the proportion of the quantity of pixels of the grayscale in the high-brightness region does not exceed the preset quantity, the electronic device may predict that the banding artifact does not exist in the preview image corresponding to the current image frame. For example, FIG. 10 shows an example in which, in the regularized histogram (that is, the regularized histogram of Yhist) corresponding to the current image frame, a quantity of pixels corresponding to a grayscale in a region (that is, the high-brightness region) with a grayscale higher than the first grayscale X1 is higher than a first threshold (that is, the proportion exceeds the preset quantity). In this case, the electronic device may predict that a banding artifact exists in the preview image corresponding to the current image frame.

**S513: The electronic device performs calculation to obtain a third inverse tone mapping curve based on the second ITM gain curve.**

In some embodiments, when determining that the current image frame does not include a face but includes a banding artifact, the electronic device may calculate a slope based on the second ITM gain curve *f*_{*gain*2} and the regularized histogram of Yhist; detect peaks and valleys above the first grayscale X1 in the regularized histogram of Yhist of the current image frame; segment the regularized histogram based on the peaks and the valleys; generate the third inverse tone mapping curve according to a piecewise function method; and perform S515, to be specific, determine the third inverse tone mapping curve the target inverse tone mapping curve corresponding to the current image frame.

For example, a process of generating the slope is described with reference to FIG. 10. As shown in FIG. 10, the electronic device may calculate a first derivative of the second ITM gain curve *f*_{*gain*2} based on the second ITM gain curve *f*_{*gain*2} ; calculate a weight by using the regularized histogram of Yhist; and multiply the first derivative and the weight to obtain the slope.

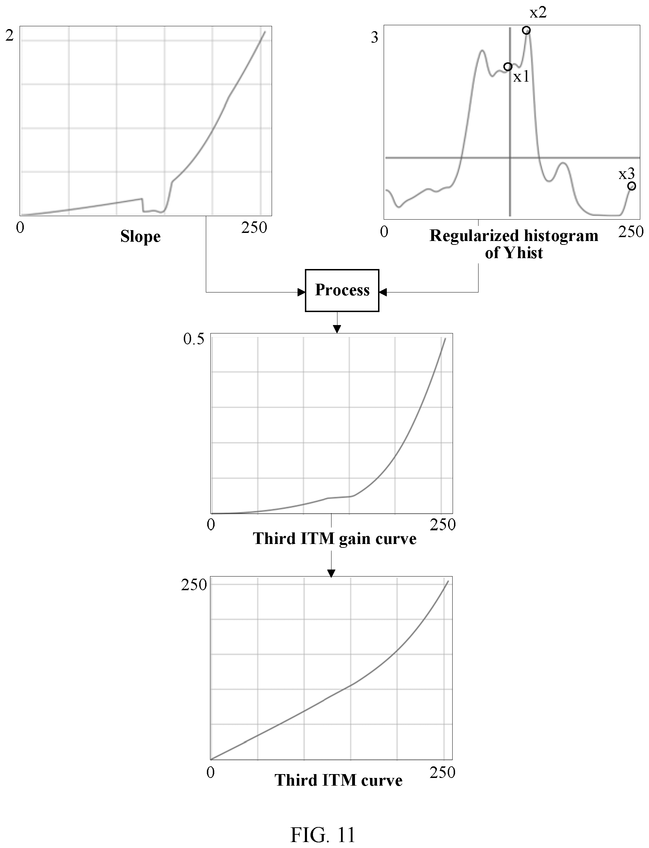

For example, a process of generating the third inverse tone mapping curve is described with reference to FIG. 11. As shown in FIG. 11, the electronic device may detect the peaks and the valleys above the first grayscale X1 in the regularized histogram of Yhist of the current image frame, to obtain x1, x2, and x3; divide the regularized histogram into three intervals based on x1, x2, and x3; perform calculation on a corresponding curve for each interval, to obtain a third ITM gain curve; and obtain the third inverse tone mapping curve based on the third ITM gain curve.

An example in which an interval is [x1, x2] is used below to describe a process of calculating an ITM gain curve corresponding to the interval.

First, slopes corresponding to x1 and x2 are found, and assuming that a mapped value of x1 is y1, it is calculated that a mapped value of x2 is y2. Further, a tone mapping curve is calculated for the interval, and a method for calculating a value y2 at an endpoint is as follows: $y 2 = {\sum }_{x 1}^{x 2} f ′ \left(x\right) ∗ Δ + y 1 ; Δ = 1 .$

*f'*(*x*) is a slope function for all graylevels, x1 and x2 are points on the curve. Therefore, *f'*(*x*1) and *f'*(*x*1) are slopes at x1 and x2.

Further, a third-order ITM gain curve for a debanding artifact in the interval may solved based on the slopes at x1 and x2 and a corresponding value y: $y 2 = m ∗ {x}^{3} + n ∗ {x}^{2} + p ∗ x + q .$

*x* is a pixel grayscale value of the first image. *m*, *n, p*, and *q* are obtained by solving an equation using y1 and y2 corresponding to x1 and x2, and slopes (derivative) corresponding to x1 and x2.

For example, the third ITM gain curve corresponding to the current image frame shown in FIG. 11 may be as follows: ${f}_{gain 3} = \left\{\begin{matrix}y 1 = {f}_{gain 2} , & x \leq x 1 \\ y 2 , & x 1 < x < x 2 \\ y 3 , & x \geq x 2\end{matrix}\right. .$

Further, the third ITM gain curve corresponding to the current image frame shown in FIG. 11 may be as follows: ${f}_{itm 3} = x ∗ \left({f}_{gain 3}+1\right) ∗ C ;$ $C = 1 / {Err}^{1 / 2.2} ;$ $Err ′ = min \left(Err1,Err2,Err_res\right) ;$ and $Err = max \left(Err′,1\right) .$

In this embodiment of this application, regularization is performed on the grayscale histogram, to obtain the regularized histogram, and the slope is calculated based on the regularized histogram, so that the obtained slope is more accurate with smaller errors.

**S514: The electronic device determines the second inverse tone mapping curve as the target inverse tone mapping curve corresponding to the current image frame.**

In some embodiments, when determining that the current image frame does not include a face and a banding artifact, the electronic device determines the second inverse tone mapping curve as the target inverse tone mapping curve corresponding to the current image frame; and processes the first image by using the target inverse tone mapping curve. For details, refer to the following steps S516 to S518.

**S515: The electronic device determines the third inverse tone mapping curve as the target inverse tone mapping curve corresponding to the current image frame.**

In some embodiments, when determining that the current image frame does not include a face but includes a banding artifact, the electronic device determines the third inverse tone mapping curve as the target inverse tone mapping curve corresponding to the current image frame; and processes the first image by using the target inverse tone mapping curve. For details, refer to the following steps S516 to S518.

**S516: The electronic device performs, based on the inverse tone mapping curve corresponding to the previous image frame, time-domain filtering on the target inverse tone mapping curve corresponding to the current image frame.**

In some embodiments, the electronic device may perform time-domain filtering on the target inverse tone mapping curve corresponding to the current image frame by using the following formula: $f = ρ ∗ {f}_{itm} + \left(1-ρ\right) ∗ {f}_{itm _ current} .$

*f* is an inverse tone mapping curve obtained through time-domain filtering. *ρ* is a preset weight. *fᵢₜₘ* is a target inverse tone mapping curve of the previous image frame obtained through time domain filtering. *f_{itm_current}* is the target inverse tone mapping curve corresponding to the current image frame.

In a first implementation, the current image frame includes a face, and the target inverse tone mapping curve corresponding to the current image frame is the first inverse tone mapping curve *f*_{*itm*1}.

In a second implementation, the current image frame does not include a face and a banding artifact, and the target inverse tone mapping curve corresponding to the current image frame is the second inverse tone mapping curve *f*_{*itm*2}.

In a third implementation, when the current image frame does not include a face but includes a banding artifact, the target inverse tone mapping curve corresponding to the current image frame is the third inverse tone mapping curve *f*_{*itm*3}.

In a fourth implementation, when the similarity between the current image frame and the previous image frame is greater than the preset threshold, the target inverse tone mapping curve *f_{itm_current}* corresponding to the current image frame is the target inverse tone mapping curve *f_{itm_last}* corresponding to the previous image frame.

In this embodiment of this application, a time-domain filtering operation is performed on the target inverse tone mapping curve, to prevent flickering of a video presented on a preview interface.

**S517: The electronic device processes, based on an inverse tone mapping curve obtained through the time-domain filtering, the first image corresponding to the current image frame, to obtain the preview image corresponding to the current image frame.**

In some embodiments, the electronic device may perform inverse tone mapping on the first image based on the inverse tone mapping curve obtained through the time-domain filtering, to obtain a third image, where an inverse tone mapping process may be: performing tone mapping on R, G, and B values of pixels in the first image based on an expansion coefficient that is in an inverse tone mapping curve and that is obtained through time-domain filtering; and perform color gamut mapping ion the third image, to obtain the preview image.

The second inverse tone mapping curve *f*_{*itm*2} = *x* * *C* * (*f*_{*gain*2} + 1) is used as an example for description. *x* is a grayscale of the first image. First, a second image is obtained based on *x* * *C*, and then the third image is obtained based on the second image *(*f*_{*gain*2} + 1).

For example, a color gamut mapping process may be as follows: for the R, G, and B values of the pixels in the third image, converting a color gamut of the third image into a color gamut corresponding to a screen (for example, converting Rec709 into a P3 color gamut) according to a color gamut mapping method, to obtain R, G and B values of pixels corresponding to the pixels in the third image.

In some other embodiments of this application, the electronic device may set a maximum expansion coefficient (*Err_Tele*) for a telephoto scene (for example, zoom>10). In step S514, *Err* in the inverse tone mapping curve is changed to *Err*3, where *Err*3 = min(*Err,Err*_*Tele*). It should be understood that noise in the telephoto scene is loud, and if a high dynamic range expansion is performed on an image in the telephoto scene, significant image noise, a poor image effect, and poor user experience may be caused.

**S518: The electronic device displays the preview image corresponding to the current image frame on the preview interface.**

In some embodiments, after obtaining the preview image corresponding to the current image frame, the electronic device may display the preview image on the preview interface. For example, the preview interface may be shown as the user interface 12 in FIG. 1B and the user interface 13 in FIG. 1C. The image displayed in the preview region 120 on the user interface 12 and the image displayed in the preview region 130 on the user interface 13 are preview images.

The foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to some technical features thereof, and such modifications or replacements do not cause the essence of corresponding technical solutions to depart from the scope of the technical solutions of embodiments of this application.

## Claims

1. An image display method, applied to an electronic device, wherein the method comprises:
detecting a first user operation for indicating to display a preview interface;
displaying a first image on the preview interface at a first moment in response to the first user operation, wherein the first image does not comprise a face, the first image comprises a first region and a second region, and average brightness of the first region is greater than average brightness of the second region; and
displaying a second image on the preview interface at a second moment, wherein the second image comprises a face, the second image comprises a third region and a fourth region, the face is located in the fourth region, and average brightness of the third region is greater than average brightness of the fourth region; and
the average brightness of the first region is greater than the average brightness of the third region, and the average brightness of the fourth region is greater than the average brightness of the second region.

2. The method according to claim 1, wherein the first image is obtained through processing based on metadata information corresponding to the first image, the second image is obtained through processing based on metadata information corresponding to the second image, and the metadata information comprises at least one of gray scale information and brightness information of a face region.

3. The method according to claim 2, wherein the gray scale information comprises a first grayscale histogram and a second grayscale histogram, the first grayscale histogram is a grayscale histogram obtained through calculation based on a grayscale histogram of an image with a first exposure level or a grayscale histogram of an image obtained by fusing a plurality of image frames with different exposure levels, and the second grayscale histogram is a histogram of an output image synthesized from a plurality of image frames with different exposure levels or a low dynamic range image.

4. The method according to claim 3, wherein the method further comprises:
compressing, based on gray scale information of the first image, brightness of a fused image corresponding to the first image, to obtain a first to-be-processed image, wherein the fused image corresponding to the first image is obtained by fusing a plurality of image frames with different exposure levels corresponding to the first image, the first to-be-processed image comprises a first to-be-processed region and a second to-be-processed region, and average brightness of the first to-be-processed region is greater than average brightness of the second to-be-processed region;
increasing brightness of the first to-be-processed region based on the gray scale information of the first image, to obtain a second to-be-processed image; and
performing color gamut mapping on the second to-be-processed image, to obtain the first image, wherein the first to-be-processed region corresponds to the first region, and the second to-be-processed region corresponds to the second region.

5. The method according to claim 4, wherein the method further comprises:
calculating a first expansion coefficient of the first image based on a first grayscale histogram corresponding to the first image and a second grayscale histogram corresponding to the first image; and
calculating a second expansion coefficient of the first image based on the first grayscale histogram corresponding to the first image, wherein the first expansion coefficient of the first image or the second expansion coefficient of the first image is used for performing brightness adjustment on the fused image corresponding to the first image.

6. The method according to claim 4 or 5, wherein the method further comprises:
performing regularization on the second grayscale histogram corresponding to the first image, to obtain a regularized histogram corresponding to the first image, wherein the regularized histogram corresponding to the first image is used for performing brightness adjustment on the fused image corresponding to the first image when it is predicted that the first image comprises a banding artifact.

7. The method according to any one of claims 1 to 6, wherein the method further comprises:
compressing, based on the metadata information corresponding to the second image, brightness of a fused image corresponding to the second image, to obtain a third to-be-processed image, wherein the fused image corresponding to the second image is obtained by fusing a plurality of image frames with different exposure levels corresponding to the second image, the third to-be-processed image comprises a third to-be-processed region and a fourth to-be-processed region, and average brightness of the third to-be-processed region is greater than average brightness of the fourth to-be-processed region;
increasing brightness of the third to-be-processed region based on the metadata information corresponding to the second image, to obtain a fourth to-be-processed image; and
performing color gamut mapping on the fourth to-be-processed image, to obtain the second image, wherein the third to-be-processed region corresponds to the third region, and the fourth to-be-processed region corresponds to the fourth region.

8. The method according to claim 7, wherein the method further comprises:
calculating a first expansion coefficient of the second image based on a first grayscale histogram corresponding to the second image and a second grayscale histogram corresponding to the second image;
calculating a second expansion coefficient of the second image based on the second grayscale histogram corresponding to the second image; and
when it is determined that the second image comprises a face, calculating a third expansion coefficient of the second image based on brightness information of a face region corresponding to the second image, wherein the third expansion coefficient is positively correlated with the brightness information of the face region; and
at least one of the first expansion coefficient of the second image, the second expansion coefficient of the second image, and the third expansion coefficient of the second image is used for performing brightness adjustment on the fused image corresponding to the second image.

9. The method according to claim 7 or 8, wherein the method further comprises:
performing regularization on the second grayscale histogram corresponding to the second image, to obtain a regularized histogram corresponding to the second image, wherein the regularized histogram corresponding to the second image is used for performing brightness adjustment on the fused image corresponding to the second image when it is predicted that the second image comprises a banding artifact.

10. The method according to any one of claims 1 to 3, wherein the method further comprises:
when it is determined that similarity between the first image and a previous image frame of the first image is greater than a preset threshold, performing, based on brightness adjustment information obtained based on metadata information corresponding to the previous image frame, brightness adjustment on a fused image corresponding to the first image, to obtain the first image, wherein the fused image corresponding to the first image is obtained by fusing a plurality of image frames with different exposure levels corresponding to the first image.

11. The method according to any one of claims 1 to 10, wherein a first expansion coefficient of a target image is obtained based on first contrast and second contrast, the first contrast is obtained based on expectations of a high-brightness part and a low-brightness part in a first grayscale histogram corresponding to the target image, the second contrast is obtained based on expectations of a high-brightness part and a low-brightness part in a second grayscale histogram corresponding to the target image, and the target image is the first image or the second image.

12. The method according to any one of claims 1 to 11, wherein a second expansion coefficient of the target image is obtained based on an average pixel level and a high-brightness coefficient of the target image, the high-brightness coefficient represents distribution of a high-brightness region in the target image, the average pixel level and the high-brightness coefficient of the target image are obtained based on the second grayscale histogram corresponding to the target image, and the target image is the first image or the second image.

13. An electronic device, comprising a camera, a display, a memory, and one or more processors, wherein the memory is configured to store a computer program, and the processor is configured to invoke the computer program, to cause the electronic device to perform the method according to any one of claims 1 to 12.

14. A computer storage medium, comprising computer instructions, wherein when the computer instructions are run on an electronic device, the electronic device is caused to perform the method according to any one of claims 1 to 12.
